# FASCICULE DE BREVET EUROPEEN

(11) **EP 3 301 701 B1**
(45) Date de publication et mention de la délivrance du brevet: **24.04.2019**
(21) Numéro de dépôt: 17201216.3
(22) Date de dépôt: 04.02.2015
(51) Int. Cl.: H01H 39/00, B60L 3/04

(54) **COUPE-CIRCUIT PYROTECHNIQUE**
PYROTECHNISCHE SCHUTZSCHALTUNG
PYROTECHNICAL FUSE

(30) Priorité: 04.02.2014 FR 1450853
(43) Date de publication de la demande: 04.04.2018
(62) Demande divisionnaire de: 15705519.5
(73) Titulaire: Autoliv Development AB, 447 83 Vårgårda (SE)
(72) Inventeur: GAUDINAT, François, 60110 Amblainville (FR); MAGNE, Alain, 78570 Andresy (FR); JACQUOT, Philippe, 93150 Le Blanc Mesnil (FR)
(74) Mandataire: Vigand, Philippe

(56) Documents cités:
- EP-A1- 2 200 061
- DE-A1- 19 616 994
- DE-A1- 19 817 133
- US-A- 5 793 275
- US-A1- 2012 194 954

## Description

La présente invention concerne de manière générale un coupe-circuit comprenant un actionneur pyrotechnique, destiné à être monté sur un véhicule automobile, et en particulier sur un véhicule électrique.

Dans de tels véhicules électriques, il faut prévoir de pouvoir couper les lignes électriques reliant les dispositifs de stockage d'énergie électrique (batteries, super condensateurs, ...) au reste du véhicule, pour mettre ce dernier en sécurité si un accident survient par exemple. En raison des puissances en jeu, et des caractéristiques des circuits électriques, des arcs électriques vont survenir lors de la coupure et remettre en cause la coupure du circuit voire son intégrité si ces arcs ne sont pas maitrisés. Il est connu dans l'art antérieur des coupe-circuits tels que celui divulgué dans le document EP0359467A2, et qui proposent des agencements spécifiques pour éteindre les arcs électriques. En contrepartie, ce système présente notamment l'inconvénient d'être encombrant s'il est utilisé pour couper des circuits électriques avec des tensions et/ou courants

US2012/194954 décrit un coupe-circuit d'après le préambule de la revendication 1.

Un but de la présente invention est de répondre aux inconvénients des documents de l'art antérieur mentionnés ci-dessus et en particulier, tout d'abord, de proposer un coupe-circuit compact et qui procure une coupure rapide même si un arc électrique est formé.

Pour cela un premier aspect de l'invention concerne un coupe-circuit comprenant :
- au moins un conducteur électrique agencé pour être relié à un circuit électrique,
- un boitier,
- une matrice,
- un poinçon agencé mobile par rapport au boitier pour passer d'une première position vers une deuxième position,
- un actionneur pyrotechnique agencé pour faire passer ledit poinçon de la première position à la deuxième position, lorsqu'il est mis à feu,
- le poinçon et la matrice étant agencés pour former un ensemble poinçon-matrice agencé pour, lorsque le poinçon passe de la première position vers la deuxième position :
   - couper ledit au moins un conducteur électrique en au moins deux parties distinctes, et
   - engendrer l'établissement, entre le poinçon et la matrice, d'au moins un arc électrique entre les au moins deux parties distinctes, lorsque le coupe-circuit est relié à un circuit électrique sous tension,
caractérisé en ce que :
- l'ensemble poinçon-matrice, lorsque le poinçon est dans la deuxième position, est agencé pour laisser au moins un passage entre les au moins deux parties distinctes, ledit au moins un passage étant agencé pour guider le dit au moins un arc électrique entre les parties distinctes, et en ce que
- l'ensemble poinçon-matrice comprend au moins une matière agencée pour être retirée par ablation par ledit au moins un arc électrique, pour générer du gaz apte à augmenter une tension dudit au moins un arc électrique.

Le coupe-circuit selon la présente invention permet de maîtriser la formation d'arcs électriques crées lorsque le poinçon coupe le conducteur électrique en deux parties distinctes. En effet, lorsque le poinçon est dans la deuxième position, un passage est formé par l'ensemble poinçon-matrice, de sorte que le ou les arcs électriques sont guidés par le passage, ce qui garantit leur localisation et limite les risques d'endommagent du reste du coupe-circuit. De plus, l'efficacité et la rapidité de coupure du circuit sont améliorées par la matière agencée pour être retirée par ablation qui permet d'augmenter la tension d'arc électrique une fois que l'actionneur pyrotechnique a fonctionné, c'est-à-dire que le coupe-circuit sera efficace même pour une tension élevée à ses bornes, sans pour autant agrandir les écarts entre les parties distinctes, ce qui améliore la compacité. En effet, la matière agencée pour être retirée par ablation est sublimée sous l'action du flux de chaleur intense de l'arc électrique, ce qui modifie la composition du plasma d'arc électrique et sa conductivité, et permet d'augmenter la tension d'arc électrique. De tels arcs électriques peuvent se créer lorsque le coupe-circuit est relié à un circuit électrique sous tension, avec des tensions allant de 0V à 600V et des courants allant de 0A à 5000A sur des charges inductives allant jusqu'à 2500µH (micro-Henry) pour une intensité inférieure à 500A et jusqu'à 150µH pour une intensité de 5000A. Le coupe-circuit selon l'invention permet de couper le courant de manière fiable en moins de 10ms et même moins de 5ms, de manière définitive, car le coupe-circuit, comprenant un actionneur pyrotechnique, celui-ci ne peut servir qu'une fois.

Avantageusement, le passage peut être formé entre le poinçon et la matrice, ou dans l'une de ces pièces.

Avantageusement, l'un du poinçon ou de la matrice est au moins partiellement réalisé avec la matière agencée pour être retirée par ablation.

Avantageusement, la matière agencée pour être retirée par ablation est du POM (polyoxyméthylène (ou polyformaldéhyde)). Selon cette mise en oeuvre, la matière à retirer par ablation va permettre de créer, lors de l'ablation, un mélange gazeux qui augmente la tension de l'arc électrique car le POM présente un ratio du nombre d'atomes de carbone sur le nombre d'atomes d'oxygène très faible, proche de 1. On peut également envisager d'utiliser du Polytéréphtalate d'éthylène (PET), du Polyméthacrylate de méthyle (PMMA), du Polytéréphtalate de butylène (PBT), du polyéthersulfone (PESU), ou encore du polyamide 6-6 (PA6.6).

Avantageusement, ledit au moins un passage est au moins partiellement délimité par la matière pouvant être retirée par ablation. La présente mise en oeuvre augmente l'efficacité du coupe-circuit, car la matière à retirer par ablation par l'arc électrique est située à son voisinage immédiat, ce qui garantit une augmentation rapide de la tension de l'arc électrique due à l'ablation de la matière

Avantageusement, ledit au moins un passage est une gorge formée dans le poinçon et/ou la matrice. On peut envisager une gorge dont les dimensions seraient les suivantes : largeur allant de 0.1 à 1 millimètre, et profondeur allant de 0.1 à 1 millimètre. Une telle gorge peut être obtenue directement par moulage si les dimensions sont compatibles avec cette technologie et la matière injectée, ou par reprise d'usinage.

Avantageusement, lorsque le poinçon est dans la deuxième position, le poinçon et la matrice sont agencés avec un ajustement serré à l'exception dudit au moins un passage. Selon la présente mise en oeuvre, le poinçon et la matrice présentent un ajustement serré pour garantir l'irréversibilité du mouvement du poinçon ce qui empêche d'une part tout mouvement en arrière. D'autre part, cet ajustement serré procure une bonne étanchéité, qui forme une barrière naturelle contre le passage de l'arc électrique ailleurs que dans le passage. En conséquence, l'arc électrique est forcé de passer par le passage qui reste libre et au niveau duquel le poinçon et la matrice ne sont pas en condition d'ajustement serré (puisqu'il y a du jeu). On peut envisager de prévoir entre le poinçon et la matrice un jeu négatif allant de 0 à 0.3 millimètres.

Avantageusement :
- chacune desdites au moins deux parties distinctes présente une extrémité coupée séparées l'une de l'autre lorsque le poinçon est dans la deuxième position,
- ledit au moins un passage est agencé sur le plus court chemin entre les extrémités coupées. Le passage étant formé sur le chemin le plus court entre les extrémités coupées, le cheminement de l'arc électrique y sera favorisé, puisque c'est le chemin qui nécessitera le moins d'énergie.

Avantageusement, le coupe-circuit comprend un insert qui comprend une portion de guidage pour le poinçon, et une portion de renfort pour la matrice. L'insert selon la présente mise en oeuvre est une seule pièce continue et monobloc qui cumule la fonction de guidage pour le poinçon et la fonction de renfort pour la matrice. L'assemblage peut se faire par surmoulage sur le conducteur électrique, ce qui minimise les risques de décalage entre le poinçon (guidé par la portion de guidage de l'insert) et la matrice (renforcée donc positionnée par la portion de renfort).

Avantageusement, l'insert est réalisé en polyamide 6-6 (PA6.6), chargé à 30% de fibres de verre.

Avantageusement, l'insert comprend une face agencée pour entrer en butée mécanique avec le poinçon et définir ainsi la deuxième position.

Avantageusement, la matrice est agencée pour être déformable de manière élastique de sorte à garantir un contact surfacique à l'exception dudit au moins un passage avec le poinçon lorsque le poinçon est dans la deuxième position. Le cheminement de l'arc électrique sera d'autant plus difficile ailleurs que dans le passage, avec un contact surfacique entre le poinçon et la matrice.

Avantageusement, la matrice comprend un évidement agencé entre elle-même et la portion de renfort. Cet évidement permet à la matrice de se déplacer et/ou se déformer sous l'action du poinçon, pour s'auto aligner avec ce dernier et assurer une bonne étanchéité entre le poinçon et la matrice. On peut envisager que l'évidement soit compris entre 0 et 2 millimètre, plus particulièrement entre 0 et 1 millimètre, et très avantageusement entre 0 et 0.5 millimètres.

Avantageusement, la matrice comprend avec la portion de renfort un point de liaison séparant deux évidements entre la matrice et la portion de renfort. Cette mise oeuvre permet un pivotement d'une paroi de la matrice autour du point de liaison, et non un écrasement. Ce point de liaison peut être placé en vis-à-vis du passage de manière à maitriser la section du passage disponible pour l'établissement de l'arc électrique.

Avantageusement, le poinçon dans la deuxième position et le boitier forment au moins une chambre de coupure et ladite au moins une chambre de coupure comprend un évent vers l'extérieur du coupe-circuit et operculé, agencé pour se rompre au-delà d'une différence de pression prédéterminée entre ladite au moins une chambre de coupure et l'extérieur du coupe-circuit. La présente mise en oeuvre propose une valve de sécurité dans la chambre de coupure calibrée pour s'ouvrir à une pression donnée. Ceci permet d'évacuer un excès de pression sans remettre en cause l'intégrité du dispositif en cas de fonctionnement au-delà des conditions nominales tout en garantissant un système étanche dans les conditions nominales.

Avantageusement, le poinçon présente deux bords de coupe, de manière à couper ledit au moins un conducteur électrique en trois parties distinctes. Cette mise en oeuvre forcera la création de deux arcs électriques en série l'un de l'autre, ce qui augmente les caractéristiques de coupure du coupe-circuit.

Avantageusement, le coupe-circuit comprend un insert qui comprend une portion de guidage pour le poinçon, et une portion de renfort pour la matrice. L'insert selon la présente mise en oeuvre est une seule pièce continue et monobloc qui cumule la fonction de guidage pour le poinçon et la fonction de renfort pour la matrice. L'assemblage peut se faire par surmoulage sur le conducteur électrique, ce qui minimise les risques de décalage entre le poinçon (guidé par la portion de guidage de l'insert) et la matrice (renforcée donc positionnée par la portion de renfort).

Avantageusement, la matrice comprend une contre forme agencée entre les deux bords de coupe, de manière à définir deux chambres de coupure, lorsque le poinçon est dans la deuxième position.

Avantageusement, le poinçon est agencé mobile suivant un axe de translation prédéterminé et la matrice est agencée de manière symétrique par rapport à l'axe de translation du poinçon. Les efforts de coupe sont symétriquement distribués, ce qui limite les risques de coincement.

Avantageusement, le poinçon comprend au moins un bord de coupe en biseau, pour couper le dit au moins un conducteur électrique progressivement lors de son passage de la première vers la deuxième position. L'effort de coupe avec cette mise en oeuvre est inférieur à celui nécessité par une coupe droite du conducteur électrique, où toute la section est cisaillée en une seule fois. Les pressions à mettre en oeuvre sont alors réduites et l'encombrement du coupe-circuit également, avec cette coupe progressive en biseau.

Avantageusement, le bord de coupe en biseau présente un angle compris entre 90° (borne exclue) et 75° par rapport à la direction de déplacement du poinçon.

Avantageusement, le poinçon comprend un bord de coupe en forme de « V » avec la pointe du « V » positionnée au milieu du bord de coupe de sorte à ce que ce soit la pointe du « V » qui finisse de couper le conducteur électrique. Cela permet l'établissement de l'arc électrique au milieu du dispositif et un meilleur équilibrage des forces en jeu. Dans ce mode de réalisation, le passage est disposé dans le prolongement ou en regard de la pointe du « V ».

Un deuxième aspect de l'invention concerne un dispositif de distribution de courant comprenant au moins un coupe-circuit selon le premier aspect de l'invention.

Un troisième aspect de l'invention concerne un véhicule automobile comportant au moins un coupe-circuit selon le premier aspect de l'invention.

Avantageusement, le véhicule automobile comprend des moyens de stockage d'énergie électrique et un dispositif de propulsion électrique relié aux moyens de stockage d'énergie électrique par l'intermédiaire dudit au moins un coupe-circuit.

Un autre but de la présente invention est de de proposer un coupe-circuit pyrotechnique avec une chambre de coupure, aisé à fabriquer et qui procure une étanchéité pendant le fonctionnement, pour garantir le confinement des gaz chauffés par le ou les des arc(s) électrique(s) et pour garantir la non pollution de l'intérieur du dispositif par des gaz, de l'humidité ou des poussières en provenance de l'extérieur du dispositif avant son fonctionnement tel qu'un indice de protection IP67 selon la norme internationale CEI 60529en.

A cet effet, un quatrième aspect de l'invention concerne un coupe circuit pyrotechnique comprenant :
- un boîtier avec au moins une chambre de coupure,
- au moins un conducteur électrique à sectionner, traversant au moins une partie du boîtier au niveau de ladite au moins une chambre de coupure,
- au moins un poinçon, agencé dans le boîtier en regard de ladite au moins une chambre de coupure, et mobile entre une première position et une deuxième position, le poinçon étant agencé pour sectionner ledit au moins un conducteur électrique lors de son passage de la première vers la deuxième position,
- au moins un actionneur pyrotechnique, agencé pour faire passer le poinçon de la première à la deuxième position lorsqu'il est actionné,
- un insert surmoulé sur ledit au moins un conducteur électrique,
caractérisé en ce que le boîtier comprend une première partie de boîtier et une deuxième partie de boîtier, avec au moins un moyen d'étanchéité entre l'insert et l'une de la première partie de boîtier et/ou de la deuxième partie de boîtier pour assurer une étanchéité de ladite au moins une chambre de coupure.

Le coupe circuit selon la mise en oeuvre ci-dessus assure une bonne étanchéité de ladite au moins une chambre de coupure, avec les moyens d'étanchéités. Cependant, il reste aisé à fabriquer, car l'insert permet d'éviter de prévoir des interfaces d'étanchéité sur le conducteur électrique lui-même et de les reporter sur l'insert. Ainsi, ces portées pourront être continues, sans décrochement pour faciliter l'implantation des moyens d'étanchéité, comme un joint torique par exemple. Autrement dit, l'étanchéité est réalisée entre seulement deux pièces en vis-à-vis à chaque fois : entre la première partie de boîtier et l'insert d'une part, et entre la deuxième partie de boîtier et l'insert d'autre part.

vantageusement, ledit au moins un conducteur électrique est agencé entre ladite au moins une chambre de coupure et le poinçon lorsque ce dernier est dans la première position.

Avantageusement, la première partie de boîtier et la deuxième partie de boîtier sont chacune en contact avec l'insert. Cela permet un bon passage des efforts entre les différents éléments du dispositif et permet d'assurer une bonne résistance de l'assemblage.

Avantageusement, l'insert est agencé entre la première partie de boîtier et la deuxième partie de boîtier, et le coupe circuit comprend des premiers moyens d'étanchéité entre i'insert et la première partie de boîtier, et des deuxièmes moyens d'étanchéité entre l'instant et la deuxième partie de boîtier.

Avantageusement, l'insert entoure ladite au moins une chambre de coupure. Cette mise en oeuvre garantit que l'étanchéité sur l'insert sera continue. On peut envisager que l'insert entoure ou circonscrit ladite au moins une chambre de coupure, de part et d'autre du conducteur électrique. Dans cette mise en oeuvre, ladite au moins une chambre de coupure peut être définie en partie par l'insert, et il n'y a pas besoin de prévoir de joint entre le conducteur électrique et le boîtier.

Avantageusement, la première partie de boîtier et la deuxième partie de boîtier sont chacune agencées pour être assemblées sur l'insert selon une direction de déplacement du poinçon. On peut très bien envisager un assemblage mâle - femelle avec les parties du boîtier qui coulissent sur l'insert lors de leur assemblage, pour venir en position finale assemblée. Le guidage du poinçon est donc amélioré car la première partie et la deuxième partie sont positionnées par rapport à la même pièce, l'insert.

Avantageusement, le poinçon comprend une zone d'étanchéité pour assurer une étanchéité entre le poinçon et l'insert et/ou le boîtier. Cette étanchéité peut être prévue entre une chambre de combustion du coupe circuit et ladite au moins une chambre de coupure, pour éviter toute influence des gaz de combustion de l'actionneur pyrotechnique sur le(s) arc(s) électrique(s).

Avantageusement, l'insert entoure ledit au moins un conducteur électrique sur au moins deux zones distinctes. Cette mise en oeuvre permet de garantir qu'aucune fonction d'étanchéité ne sera faite sur le conducteur électrique lui-même. C'est le surmoulage qui fait l'étanchéité autour du conducteur électrique. En d'autres termes, aucune étanchéité n'est à prévoir entre le conducteur et les première et deuxième parties de boitier.

Avantageusement, le poinçon dans la deuxième position est agencé entre lesdites au moins deux zones distinctes.

Avantageusement, l'insert comprend au moins une portion de surmoulage agencée dans un moyen de retenue dudit au moins un conducteur électrique. Le moyen de retenue peut prendre forme d'un ou plusieurs trous, cavité ou découpe. Cette mise en oeuvre permet d'augmenter la solidarisation de l'insert avec le conducteur électrique et ainsi améliorer l'étanchéité entre les deux pièces.

Avantageusement, le dit au moins un moyen d'étanchéité comprend un joint. On peut envisager un joint torique.

Avantageusement, le coupe circuit comprend deux joints, et i'insert comprend deux portées de joint, chacune en regard avec une portée de joint de la première partie de boîtier et une portée de joint de la deuxième partie de boîtier.

On peut prévoir un ou plusieurs joint(s) torique(s) pour réaliser les moyens d'étanchéité. En particulier, on peut prévoir des joints toriques de diamètre compris entre 2mm et 3mm, avec une compression allant de 0.5 à 0.8mm. Plus précisément, on peut prévoir un joint torique de diamètre 2.55mm ±0.15mm, avec une compression de 0.7mm ±0.15mm.

Avantageusement, le coupe circuit comprend au moins une lèvre d'étanchéité surmoulée.

Avantageusement, la première partie de boîtier et la deuxième partie de boîtier sont soudées. On peut souder chaque partie de boîtier sur l'insert.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe et en perspective d'un coupe-circuit pyrotechnique selon l'invention, avant fonctionnement ;
- la figure 2 représente un détail de la coupe de la figure 1, après fonctionnement du coupe-circuit ;
- la figure 3 représente une coupe partielle du coupe-circuit selon l'axe III-III de la figure 2 ;
- la figure 4 représente la vue en perspective du détail IV de la figure 1.

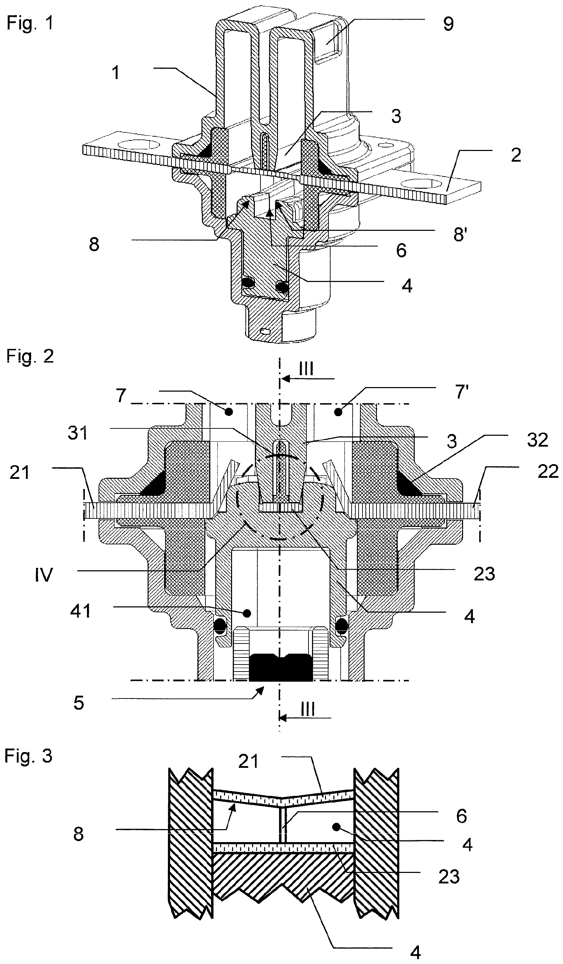

La figure 1 représente une vue en perspective d'un coupe-circuit selon l'invention, en coupe. Un boîtier 1 est partiellement traversé par un conducteur électrique 2, avec les extrémités de ce dernier qui forment deux bornes de connexion pour le coupe-circuit. Le coupe-circuit comprend un poinçon 4 et une matrice 3 qui, avant fonctionnement du coupe-circuit, sont agencés de part et d'autre du conducteur 2, comme représenté sur la figure 1.

Le poinçon 4 présente sur sa partie supérieure en regard de la matrice 3 une rainure délimitée par deux bords de coupe 8 et 8', et un passage 6 qui est une gorge verticale reliant le bord de coupe 8 avec le fond de la rainure du poinçon 4. Un autre passage, non visible, relie le bord de coupe 8' avec le fond de la rainure du poinçon 4. L'utilité du passage 6 sera expliquée notamment aux paragraphes relatifs à la figure 3.

Le poinçon 4 est représenté ici dans une première position, dans laquelle le conducteur électrique 2 est intègre. Pour le couper, le coupe-circuit comprend un actionneur pyrotechnique 5 (visible sur la figure 2 uniquement) qui est agencé pour faire passer le poinçon 4 dans une deuxième position, telle que représentée sur la figure 2.

Par exemple, le conducteur électrique 2 peut présenter une section de 2mmx16mm, une épaisseur résiduelle en regard du poinçon 4 de 1.2mm, et la gorge du poinçon 4 une largeur de 5mm ± 1mm.

La figure 2 représente donc le coupe-circuit de la figure 1 après fonctionnement, c'est-à-dire avec le conducteur électrique 2 séparé en trois parties distinctes 21, 22, et 23. Pour obtenir ce résultat, l'actionneur pyrotechnique 5 (comprenant un allumeur électro pyrotechnique par exemple), logé sous le poinçon 4 a été mis à feu et a généré des gaz de manière à pressuriser une chambre de combustion 41.

Sous l'effet des gaz et de leur pression dans la chambre de combustion 41, le poinçon 4 est passé dans une deuxième position lors d'un mouvement de translation, pendant lequel le conducteur 2 a été donc séparé en trois parties distinctes 21, 22, et 23. Comme représenté à la figure 1 ou 3, les bords de coupe 8 et 8' ne sont pas rectilignes, mais en Vé, de sorte à couper progressivement le conducteur électrique 2, avec des efforts de coupe inférieurs à ceux nécessaire au cisaillement simultané de toute la section du conducteur électrique 2. En effet, avec ces bords de coupe 8 et 8' en biseau ou non perpendiculaires au sens de déplacement du poinçon 4, la coupe du conducteur électrique 2 est progressive.

On peut noter que le poinçon 4 comprend une gorge dans laquelle est monté un joint torique, afin de garantir une bonne étanchéité de la chambre de combustion 41. On obtient ainsi un effort de découpe du poinçon 4 aussi élevé que possible, et les gaz de l'actionneur pyrotechnique 5 ne peuvent pas aller dans les chambres de coupure 7 et 7', ce qui limite les pollutions possible du plasma d'arc électrique avec les gaz de le l'actionneur pyrotechnique 5.

Avec le poinçon 4 dans la deuxième position, la rainure du poinçon 4 s'est engagée dans la matrice 3, et deux chambres de coupure distinctes 7 et 7' ont été formées. La partie 21 du conducteur électrique 2 est donc séparée physiquement de la partie 22 du conducteur électrique 2 par le poinçon 4, ce qui limite la possibilité de création d'arc électrique direct entre les parties 21 et 22, d'autant plus qu'en deuxième position, le poinçon 4 est monté serré sur la matrice 3.

Cet ajustement serré permet d'atteindre plusieurs résultats. D'une part, le maintien du poinçon 4 dans la deuxième position est garanti par ce montage serré, de sorte que la séparation des chambres de coupure 7 et 7' est garantie dans le temps. Il est à noter que le coupe-circuit comprend un évent 9 (visible sur la figure 1) pour chaque chambre de coupure 7 et 7', et operculé, de sorte qu'il ne s'ouvre que si la pression dans la chambre de coupure 7 ou 7' concernée dépasse une valeur seuil.

D'autre part, l'ajustement serré permet de provoquer ou engendrer une déformation élastique et/ou plastique du poinçon et/ou de la matrice 3, qui seront donc en contact surfacique l'un avec l'autre, avec au final une bonne étanchéité entre les chambres de coupure 7 et 7'. Cette étanchéité permet d'éviter la création d'arcs électriques entre les chambres de coupure 7 et 7', et les parties distinctes 21, 22. Cependant, comme évoqué ci-dessus, un passage 6 relie les bords de coupe 8 et 8' du poinçon 4 au fond de la rainure du poinçon 4, comme représenté figure 3, et ce passage 6 permet d'y localiser avec certitude les arcs électriques créés lors de la coupure du conducteur électrique 2. Un premier arc peut donc se former entre la partie distincte 21 et la partie distincte 23, et un deuxième peut se former entre la partie distincte 23 et la partie distincte 22.

La matrice peut se déformer de 0 à 2 millimètres, préférentiellement de 0 à 1 millimètre et encore plus préférentiellement de 0 à 0.5 millimètres. A cet effet, un évidement est ménagé entre la matrice 3 et un insert 31, ce qui autorise de tels déplacements et/ou déformations.

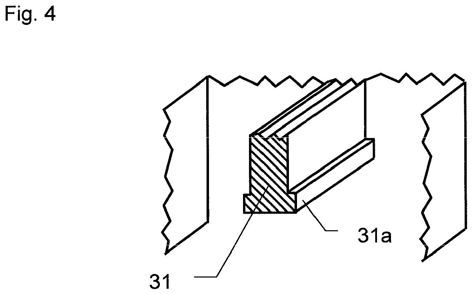

Comme représenté sur la figure 4 qui est la vue en perspective d'une partie de l'insert 31 du détail IV de la figure 1, l'insert 31 présente un évidement sur tout le long de l'interface avec la matrice 3. Cet évidement est délimité par une portion 31a de l'insert 31. La portion 31a forme une butée pour la matrice 3 en l'empêchant de se resserrer sur elle-même, sur la largeur du conducteur 2, au moment de la coupe du conducteur 2 tout en laissant à la matrice 3 la possibilité de se déformer au-dessus la portion 31a. Cette liberté de déformation permet de garantir un bon contact surfacique, hors passage 6, entre le poinçon 4 et la matrice 3 dans la deuxième position.

Par exemple, la hauteur de la portion 31a peut être comprise entre 0.5mm et 5mm, et l'évidement peut présenter une réduction de largeur de 0.5mm à 1mm.

L'insert 31 peut être réalisé en polyamide 6.6 et a pour fonction principale de renforcer la matrice 3. Comme représenté, l'insert 31 forme aussi un alésage dans lequel coulisse le poinçon 4, ce qui offre un positionnement direct entre le poinçon 4 et la matrice 3, puisque c'est la même pièce.

Comme on le voit sur la figure 1 et sur la figure 2, le boîtier 1 est formé en deux parties distinctes, avec une première partie de boîtier et une deuxième partie de boîtier de part et d'autre de l'insert surmoulé 31, qui comprend deux portions mâles qui permettent de recevoir le boîtier supérieur et le boîtier inférieur lors de l'assemblage.

Comme vu ci-dessus, les chambres de coupure 7 et 7' et le poinçon 4 sont définis de sorte à forcer l'établissement des arcs dans les passages en ne laissant que ces derniers en tant que chemin de communication entre les chambres de coupure 7 et 7'. L'insert surmoulé 31 ainsi que au moins un joint torique 32 entre la première partie de boîtier et l'insert surmoulé 31 permettent de confiner les gaz naturellement présent dans les chambres de coupure 7 et 7' dans ces dernières, même si ces gaz confinés sont réchauffés par les arcs électriques.

De plus, comme l'insert surmoulé 31 entoure complètement chacune des parties distinctes 21 et 22, ainsi que les chambres de coupure 7 et 7', alors l'interface d'étanchéité est particulièrement simple à concevoir, avec comme ici, le joint torique 32 monté dans une portion inclinée de la première partie de boîtier, et comprimé par l'insert surmoulé 31. Seulement deux pièces sont en contact avec le joint torique 32, ce qui offre une simplicité de montage et de conception.

Par exemple, on peut prévoir que le joint torique 32 présente un diamètre de 2.55mm, et est comprimé de 0.7mm.

Ainsi, les fuites de gaz (et éventuellement celle des arcs électriques) sont empêchées jusqu'à des pressions au moins égales à 2MPa, plus préférentiellement 3MPa, et encore plus préférentiellement 5MPa dans les chambres de coupure 7 et 7'.

En outre, l'insert surmoulé 31 couplé au moyen d'étanchéité permet d'obtenir une étanchéité de niveau IP67, comme défini dans les normes DIN40050, CEI 60529, ou BS 5490. Cela permet d'éviter toute intrusion de corps dans le coupe circuit qui pourrait en altérer le fonctionnement. Cela permet de pouvoir positionner le coupe circuit dans un plus grand nombre d'endroits dans le véhicule.

On peut également prévoir un deuxième joint torique entre la deuxième partie de boîtier et l'insert surmoulé 31, comme on peut le voir sur les figures 1 et 2.

Ainsi, l'étanchéité du dispositif est toujours assurée à l'interface entre deux pièces et jamais à l'interface de trois pièces comme cela serait le cas si le dispositif n'était pas pourvu de l'insert surmoulé 31. En d'autres termes, cet aspect de l'invention propose un insert surmoulé sur le conducteur électrique pour avoir une étanchéité à assurer uniquement entre l'insert et l'une des parties du boîtier à chaque fois.

La figure 3 représente une coupe partielle selon l'axe III-III de la figure 2, sans la matrice 3 (non représentée pour des raisons de clarté). La partie 21 du conducteur électrique 2 a été déplacée vers le haut par le bord de coupe 8, et pliée en Vé, en raison de la forme en Vé du bord de coupe 8 du poinçon 4. La partie 23 du conducteur électrique 2 est quant à elle restée au fond de la rainure du poinçon 4, et on voit sur cette figure 3 le passage 6 qui relie le bord de coupe 8 au fond de la rainure du poinçon 4.

En raison des caractéristiques électriques du circuit pour lequel le coupe-circuit est prévu (tensions allant de 0V à 600V et des courants allant de 0A à 50000A sur des charges inductives allant jusqu'à 2500µH (micro-Henry) pour une intensité inférieure à 500A et jusqu'à 150µH pour une intensité de 5000A), un arc électrique se formera lorsque le poinçon 4 passe de la première position à la deuxième position, et coupe le conducteur électrique 2. Cet arc électrique, lorsque le poinçon 4 est dans la deuxième position, va naturellement cheminer par le passage 6, pour les raison ci-dessous.

Tout d'abord, le poinçon 4 et la matrice 3 sont en ajustement serré, et seul le passage 6 est un passage libre entre la chambre de coupure 7 et le fond de la rainure du poinçon 4. Enfin, le passage 6 est agencé au niveau du passage le plus court entre la partie 21 du conducteur électrique 2 et la partie 23 du conducteur électrique 2. En effet, le passage 6 débouche dans sa partie supérieure au niveau de la pointe inférieure du Vé de la partie 21 du conducteur électrique 2. En raison de la coupure en trois parties distinctes, deux arcs électriques sont créés en série, ce qui augmente la tension totale des arcs et donc la tension aux bornes du coupe circuit ce qui permet d'annuler la valeur du courant dans le circuit électrique.

Grâce au passage 6, l'arc électrique est localisé et doit cheminer par le passage 6. L'invention propose au surplus d'augmenter la tension de l'arc électrique lorsque ce dernier s'est formé. A cet effet, une matière agencée pour être retirée par ablation est fournie à proximité du passage 6, puisque l'arc électrique y sera présent. Cette matière agencée pour être retirée (ou érodée) par ablation sera sublimée et/ou vaporisée par le fort flux de chaleur imposé par l'arc électrique, ce qui va modifier la composition du plasma de l'arc électrique et donc sa conductivité. En choisissant la matière à retirer par ablation parmi les matières plastiques, la tension aux bornes de l'arc est augmentée, et de bons résultats sont obtenus avec du POM dit polyoxyméthylène (ou polyformaldéhyde), car cette matière présente un faible ratio d'atome de carbone par rapport aux atomes d'oxygène.

Enfin, on peut noter que la taille du passage 6 peut conditionner la quantité de matière retirée par ablation, plus la taille de la gorge formant le passage 6 est faible, plus l'érosion sera forte. De bons résultats sont obtenus avec une gorge d'une largeur allant de 0.1 à 1 millimètre, et d'une profondeur allant de 0.1 à 1 millimètre.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Coupe-circuit comprenant :
- au moins un conducteur électrique (2) agencé pour être relié à un circuit électrique,
- un boitier (1),
- une matrice (3),
- un poinçon (4) agencé mobile par rapport au boitier (1) pour passer d'une première position vers une deuxième position,
- un actionneur pyrotechnique (5) agencé pour faire passer ledit poinçon (4) de la première position à la deuxième position, lorsqu'il est mis à feu,
- le poinçon (4) et la matrice (3) étant agencés pour former un ensemble poinçon-matrice agencé pour, lorsque le poinçon (4) passe de la première position vers la deuxième position :
- couper ledit au moins un conducteur électrique (2) en au moins deux parties distinctes (21, 22), et
- engendrer l'établissement, entre le poinçon (4) et la matrice (3), d'au moins un arc électrique entre les au moins deux parties distinctes (21, 22), lorsque le coupe-circuit est relié à un circuit électrique sous tension,
- l'ensemble poinçon-matrice, lorsque le poinçon (4) est dans la deuxième position, est agencé pour laisser au moins un passage (6) entre les au moins deux parties distinctes (21, 22), ledit au moins un passage étant agencé pour guider ledit au moins un arc électrique entre les parties distinctes (21, 22), **caractérisé en ce que** :
- l'ensemble poinçon-matrice comprend au moins une matière agencée pour être retirée par ablation par ledit au moins un arc électrique, pour générer du gaz apte à augmenter une tension dudit au moins un arc électrique.

2. Coupe-circuit selon la revendication 1, dans lequel ledit au moins un passage est au moins partiellement délimité par la matière pouvant être retirée par ablation.

3. Coupe-circuit selon l'une des revendications 1 ou 2, **caractérisé en ce que** ledit au moins un passage (6) est une gorge formée dans le poinçon et/ou la matrice.

4. Coupe-circuit selon l'une des revendications 1 à 3 **caractérisé en ce que**, lorsque le poinçon (4) est dans la deuxième position, le poinçon (4) et la matrice (3) sont agencés avec un ajustement serré à l'exception dudit au moins un passage (6).

5. Coupe-circuit selon la revendication 4 **caractérisé en ce que** :
- chacune desdites au moins deux parties distinctes (21, 22) présente une extrémité coupée séparées l'une de l'autre lorsque le poinçon est dans la deuxième position,
- ledit au moins un passage est agencé sur le plus court chemin entre les extrémités coupées.

6. Coupe-circuit selon l'une des revendications 1 à 5 **caractérisé en ce que** la matrice (3) est agencée pour être déformable de manière élastique de sorte à garantir un contact surfacique à l'exception dudit au moins un passage (6) avec le poinçon (4) lorsque le poinçon (4) est dans la deuxième position.

7. Coupe-circuit selon l'une des revendications 1 à 6 **caractérisé en ce que** le poinçon (4) dans la deuxième position et le boitier (1) forment au moins une chambre de coupure (7) et **en ce que** ladite au moins une chambre de coupure comprend un évent (9) vers l'extérieur du coupe-circuit et operculé agencé pour se rompre au-delà d'une différence de pression prédéterminée entre ladite au moins une chambre de coupure (7) et l'extérieur du coupe-circuit.

8. Coupe-circuit selon d'une des revendications 1 à 7 **caractérisé en ce que** le poinçon (4) présente deux bords de coupe (8, 8') de manière à couper ledit au moins un conducteur électrique (2) en trois parties distinctes (21, 22, 23).

9. Coupe-circuit selon la revendication 8, **caractérisé en ce que** la matrice (3) comprend une contre forme agencée entre les deux bords de coupe (8, 8') de manière à définir deux chambres de coupure (7, 7') lorsque le poinçon est dans la deuxième position.

10. Coupe-circuit selon la revendication 9, **caractérisé en ce que** le poinçon (4) est agencé mobile suivant un axe de translation prédéterminé et **en ce que** la matrice (3) est agencée de manière symétrique par rapport à l'axe de translation du poinçon (4).

11. Coupe-circuit selon d'une des revendications 1 à 10 **caractérisé en ce que** le poinçon (4) comprend au moins un bord de coupe en biseau, pour couper le dit au moins un conducteur électrique (2) progressivement lors de son passage de la première vers la deuxième position.

12. Coupe-circuit selon d'une des revendications 1 à 11 **caractérisé en ce que** la matière agencée pour être retirée par ablation est du polyoxyméthylène (POM).

13. Dispositif de distribution de courant comprenant au moins un coupe-circuit selon l'une des revendications 1 à 12.

14. Véhicule automobile comportant au moins un coupe-circuit selon l'une des revendications 1 à 12.

15. Véhicule automobile selon la revendication précédente, comprenant des moyens de stockage d'énergie électrique et un dispositif de propulsion électrique relié aux moyens de stockage d'énergie électrique par l'intermédiaire dudit au moins un coupe-circuit.

## Patentansprüche

1. Schutzschalter, umfassend:
- mindestens einen elektrischen Leiter (2), der so angeordnet ist, dass er mit einem elektrischen Stromkreis verbunden wird,
- ein Gehäuse (1),
- eine Matrize (3),
- einen Stempel (4), der bezogen auf das Gehäuse (1) beweglich angeordnet ist, damit er sich aus einer ersten Position in eine zweite Position bewegt,
- ein pyrotechnisches Stellglied (5), das so angeordnet ist, dass es den Stempel (4) aus der ersten Position in die zweite Position gelangen lässt, wenn es gezündet wird,
- wobei der Stempel (4) und die Matrize (3) so angeordnet sind, dass sie eine Stempel-Matrize-Anordnung bilden, die so angeordnet ist, dass sie, wenn sich der Stempel (4) aus der ersten Position in die zweite Position bewegt:
- den mindestens einen elektrischen Leiter (2) in mindestens zwei getrennte Teile (21, 22) zerschneidet, und
- die Erzeugung, zwischen dem Stempel (4) und der Matrize (3), von mindestens einem Lichtbogen zwischen den mindestens zwei getrennten Teilen (21, 22) bewirkt, wenn der Schutzschalter mit einem spannungsführenden elektrischen Stromkreis verbunden ist,
- die Stempel-Matrize-Anordnung, wenn sich der Stempel (4) in der zweiten Position befindet, so angeordnet ist, dass sie mindestens einen Durchgang (6) zwischen den mindestens zwei getrennten Teilen (21, 22) freilässt, wobei der mindestens eine Durchgang so angeordnet ist, dass er den mindestens einen Lichtbogen zwischen den getrennten Teilen (21, 22) führt, **dadurch gekennzeichnet, dass:**
- die Stempel-Matrize-Anordnung mindestens ein Material umfasst, das so angeordnet ist, dass es mittels Abtragung durch den mindestens einen Lichtbogen entfernbar ist, damit es Gas erzeugt, das in der Lage ist, eine Spannung des mindestens einen Lichtbogens zu erhöhen.

2. Schutzschalter nach Anspruch 1, wobei der mindestens eine Durchgang zumindest teilweise von dem Material begrenzt ist, das durch Abtragung entfernbar ist.

3. Schutzschalter nach Anspruch 1 oder 2, **dadurch gekennzeichnet, dass** der mindestens eine Durchgang (6) eine Rille ist, die in dem Stempel und/oder der Matrize ausgebildet ist.

4. Schutzschalter nach einem der Ansprüche 1 bis 3, **dadurch gekennzeichnet, dass,** wenn sich der Stempel (4) in der zweiten Position befindet, der Stempel (4) und die Matrize (3) abgesehen von dem mindestens einen Durchgang (6) im Presssitz angeordnet sind.

5. Schutzschalter nach Anspruch 4, **dadurch gekennzeichnet, dass:**
- jedes der mindestens zwei getrennten Teile (21, 22) ein abgeschnittenes Ende aufweist, die voneinander getrennt sind, wenn sich der Stempel in der zweiten Position befindet,
- der mindestens eine Durchgang auf dem kürzesten Weg zwischen den abgeschnittenen Enden angeordnet ist.

6. Schutzschalter nach einem der Ansprüche 1 bis 5, **dadurch gekennzeichnet, dass** die Matrize (3) so angeordnet ist, dass sie derart elastisch verformbar ist, dass sie abgesehen von dem mindestens einen Durchgang (6) für einen Oberflächenkontakt mit dem Stempel (4) sorgt, wenn sich der Stempel (4) in der zweiten Position befindet.

7. Schutzschalter nach einem der Ansprüche 1 bis 6, **dadurch gekennzeichnet, dass** der Stempel (4) in der zweiten Position und das Gehäuse (1) mindestens eine Trennkammer (7) bilden, und dadurch, dass die mindestens eine Trennkammer eine mit einem Verschluss versehene, in Richtung der Außenumgebung des Schutzschalters weisende Ausströmöffnung (9) umfasst, die so angeordnet ist, dass sie über einem vorgegebenen Druckunterschied zwischen der mindestens einen Trennkammer (7) und der Außenumgebung des Schutzschalters aufreißt.

8. Schutzschalter nach einem der Ansprüche 1 bis 7, **dadurch gekennzeichnet, dass** der Stempel (4) zwei Schnittkanten (8, 8') derart aufweist, dass sie den mindestens einen elektrischen Leiter (2) in drei getrennte Teile (21, 22, 23) zerschneiden.

9. Schutzschalter nach Anspruch 8, **dadurch gekennzeichnet, dass** die Matrize (3) eine Gegenform umfasst, die zwischen den beiden Schnittkanten (8, 8') derart angeordnet ist, dass sie zwei Trennkammern (7, 7') definiert, wenn sich der Stempel in der zweiten Position befindet.

10. Schutzschalter nach Anspruch 9, **dadurch gekennzeichnet, dass** der Stempel (4) auf einer vorgegebenen Translationsachse beweglich angeordnet ist, und dadurch, dass die Matrize (3) bezogen auf die Translationsachse des Stempels (4) symmetrisch angeordnet ist.

11. Schutzschalter nach einem der Ansprüche 1 bis 10, **dadurch gekennzeichnet, dass** der Stempel (4) mindestens eine schräge Schnittkante umfasst, damit der mindestens eine elektrische Leiter (2) bei seiner Bewegung aus der ersten in die zweite Position schrittweise zerschnitten wird.

12. Schutzschalter nach einem der Ansprüche 1 bis 11, **dadurch gekennzeichnet, dass** das Material, das so angeordnet ist, dass es durch Abtragung entfernbar ist, Polyoxymethylen (POM) ist.

13. Vorrichtung zur Stromverteilung, die mindestens einen Schutzschalter nach einem der Ansprüche 1 bis 12 umfasst.

14. Kraftfahrzeug, das mindestens einen Schutzschalter nach einem der vorhergehenden Ansprüche 1 bis 12 aufweist.

15. Kraftfahrzeug nach dem vorhergehenden Anspruch, das Mittel zum Speichern elektrischer Energie und eine elektrische Antriebsvorrichtung umfasst, die mit den Mitteln zum Speichern elektrischer Energie über den mindestens einen Schutzschalter verbunden ist.

## Claims

1. Circuit breaker comprising:
- at least one electrical conductor (2) arranged to be connected to an electrical circuit,
- a housing (1),
- a die (3),
- a punch (4) arranged to move relative to the housing (1) to pass from one first position to a second position,
- a pyrotechnic actuator (5) arranged to make the said punch (4) move from the first position to the second position when it is ignited,
- the punch (4) and the die (3) being arranged to form a punch-die assembly in order, when the punch (4) passes from the first position to the second position:
- to cut the at least one electrical conductor (2) in at least two separate parts (21, 22), and
- to cause, between the punch (4) and the die (3), the creation of at least one electrical arc between the at least two separate parts (21, 22) when the circuit breaker is connected to an electrical circuit under tension,
- the punch-die assembly, when the punch (4) is in the second position, is arranged to leave at least one passage (6) between the at least two separate parts (21, 22), the at least one passage being arranged to guide the said at least one electrical arc between the separate parts (21, 22), **characterised**
**in that:**
- the punch-die assembly comprises at least one material arranged to be removed by ablation by the said at least one electrical arc to generate gas able to increase a tension of the said at least one electrical arc.

2. Circuit breaker according to claim 1 wherein the said at least one passage is at least partially delimited by the material which can be removed by ablation.

3. Circuit breaker according to any one of claims 1 or 2, **characterised in that** the said at least one passage (6) is a throat formed in the punch and/or the die.

4. Circuit breaker according to any one of claims 1 to 3 **characterised in that,** when the punch (4) is in the second position, the punch (4) and the die (3) are arranged to make a tight fit except for the said at least one passage (6).

5. Circuit breaker according to claim 4 **characterised in that:**
- each of the said at least two separate parts (21, 22) has a cut end separated from the other when the punch is in the second position,
- the said at least one passage is arranged on the shortest path between the cut ends.

6. Circuit breaker according to any one of claims 1 to 5 **characterised in that** the die (3) is arranged to be deformable in an elastic manner to as to guarantee a surface contact except for the said at least one passage (6) with the punch (4) when the punch (4) is in the second position.

7. Circuit breaker according to any one of claims 1 to 6 **characterised in that** the punch (4) in the second position and the housing (1) forming at least one arcing chamber (7) and **in that** the said at least one arcing chamber comprises a vent (9) to the outside of the circuit breaker and is capped so that it can burst above a predetermined difference in pressure between the said at least one arcing chamber (7) and the outside of the circuit breaker.

8. Circuit breaker according to any one of claims 1 to 7 **characterised in that** the punch (4) has two cutting edges (8, 8') so that it can cut the said at least one electrical conductor (2) into three separate parts (21, 22, 23).

9. Circuit breaker according to claim 8, **characterised in that** the die (3) comprises a counter shape arranged between the two cutting edges (8, 8') such that it defines two arcing chambers (7, 7') when the punch is in the second position.

10. Circuit breaker according to claim 9, **characterised in that** the punch (4) is arranged to move along a predetermined translational axis and **in that** the die (3) is arranged in a **symmetrical** manner relative to the translational axis of the punch (4).

11. Circuit breaker according to any one of claims 1 to 10 **characterised in that** the punch (4) comprises at least one bevelled cutting edge so that it can cut the said at least one electrical conductor (2) progressively while passing from the first to the second position.

12. Circuit breaker according to any one of claims 1 to 11 **characterised in that** the material arranged to be removed by ablation is polyoxymethylene (POM).

13. Current distribution device comprising at least one circuit breaker according to any one of claims 1 to 12.

14. Automobile vehicle having at least one circuit breaker according to any one of claims 1 to 12.

15. Automobile vehicle according to the preceding claim, comprising electrical energy storage means and an electrical propulsion device connected to electrical energy storage means by means of the said at least one circuit breaker.
